(19) Europäisches Patentamt
European Patent Office
Office européen des brevets

(11) Veröffentlichungsnummer : **0 383 781 B1**

(12) # EUROPÄISCHE PATENTSCHRIFT

(45) Veröffentlichungstag der Patentschrift :
**13.05.92 Patentblatt 92/20**

(51) Int. Cl.$^5$ : **B60T 8/32**

(21) Anmeldenummer : **88908225.1**

(22) Anmeldetag : **05.10.88**

(86) Internationale Anmeldenummer :
**PCT/EP88/00883**

(87) Internationale Veröffentlichungsnummer :
**WO 89/03331 20.04.89 Gazette 89/09**

(54) **ANTIBLOCKIER- UND/ODER ANTRIEBSSCHLUPFREGELSYSTEM.**

(30) Priorität : **15.10.87 DE 3734878**

(43) Veröffentlichungstag der Anmeldung :
**29.08.90 Patentblatt 90/35**

(45) Bekanntmachung des Hinweises auf die Patenterteilung :
**13.05.92 Patentblatt 92/20**

(84) Benannte Vertragsstaaten :
**AT DE FR GB SE**

(56) Entgegenhaltungen :
**DE-A- 2 204 092**
**DE-A- 3 545 901**
**US-A- 3 967 862**
**US-A- 4 585 280**
**Microprocessors and Microsystems, vol. 6, no. 7, September 1982, (Whitstable, Kent, GB), D.Green: "The computerized familycar will be commonplace in Europe before end of th decade", pages 381-388**

(73) Patentinhaber : **ROBERT BOSCH GMBH**
**Postfach 30 02 20**
**W-7000 Stuttgart 30 (DE)**

(72) Erfinder : **VAN ZANTEN, Anton**
**Waldstrasse 15/2**
**W-7257 Ditzingen 4 (DE)**
Erfinder : **RUF, Wolf-Dieter**
**Schlatthülzlesweg 17**
**W-7076 Waldstetten (DE)**
Erfinder : **KOST,Friedrich**
**Johannes-Brahms-Strasse 1**
**W-7014 Kornwestheim (DE)**
Erfinder : **WEISS, Karl-Josef**
**Hausgärten 33**
**W-7050 Waiblingen (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

EP 0 383 781 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Antiblockierregelsystem oder Antriebsschlupfregelsystem mit den Merkmalen des Oberbegriffs des Anspruchs 1, wie es beispielsweise aus US-A- 4 585 280 bekannt ist.

### Problembeschreibung

Alle bekannten Radregelalgorithmen haben das erklärte Ziel, den unmittelbar geregelten Reifenschlupf innerhalb eines möglichst engen Bereichs um das Maximum der Schlupfkurve zu halten, wobei die Schlupfkurve den Zusammenhang zwischen Kraftschluß und Schlupf wiedergibt. Bei dem System ABS2 von Bosch, wird im Prinzip der Reifenschlupf solange erhöht, bis das System Rad-Reifen instabil wird. Danach wird der Reifenschlupf solange abgesenkt, bis das System Rad-Reifen wieder zu einem stabilen Punkt auf der Schlupfkurve gefunden hat. Wenn dieser Punkt erreicht ist wird der Schlunf wieder erhöht und es wiederholt sich der Regelzyklus. Die Instabilitätserkennung ist ein Hauptmerkmal des Antiblockiersystems.

Wenn die Schlupfkurve nach dem Maximum schnell abfällt, dann verzögert das Rad beim Überschreiten des Maximums sehr schnell, auch wenn das Bremsmoment nur knapp oberhalb dem Wert gehalten wird der dem Maximum der Schlupfkurve entspricht. Eine sichere Instabilitätserkennung ist dann unproblematisch. Jedoch kann hier durch die schnelle Radverzögerung der Reifenschlupf sehr groß werden und damit können erhebliche Verluste an Bremskraft und Seitenführungskraft auftreten.

Wenn im Gegensatz die Schlupfkurve nach dem Maximum kaum abfällt, wie z. B. auf Eis, dann verzögert das Rad nur langsam wenn das Bremsmoment nur knapp oberhalb dem Wert gehalten wird, der dem Maximum der Schupfkurve entspricht. Die Instabilitätserkennung ist dann viel schwieriger. Eventuell kann erst bei großem Bremsschlupf Instabilität erkannt werden, wodurch wieder erhebliche Verluste an Seitenführungskraft auftreten können.

Für eine gute Bremswirkung und für eine möglichst große Seitenführungskraft sollte das Maximum der Schlupfkurve nichtüberschritten werden. Für erhöhte Anforderungen an die Seitenführungskraft sollte der Reifenschlupf unterhalb $\lambda^*$ gehalten werden können, wobei $\lambda^*$ der Schlupf ist, bei dem das Maximum der Schlupfkurve liegt. Da bei Schlupfwerten kleiner als $\lambda^*$ das System Rad-Reifen stabil ist, kann die Instabilitätserkennung nicht für eine Regelung auf Schlupfwerte kleiner als $\lambda^*$ herangezogen werden.

Eine Regelung auf Schlupfwerte kleiner als $\lambda^*$ wäre möglich, wenn die Schlupfkurve und der momentane Schlupf bekannt wären. Da für diese Bestimmung schwer meßbare Hilfssignale, wie die Fahrzeuggeschwindigkeit, notwendig sind, muß für eine wirtschaftliche Lösung nach einer alternative gesucht werden. Eine mögliche alternative ist die Steigung der Schlupfkurve.

Im allgemeinen nimmt die Steigung der Schlupfkurve monoton mit steigendem Schlupf ab. Die Beziehung zwischen Reifenschlupf und Steigung der Schlupf kurve ist dann eindeutig. Die Forderung nach einer Regelung auf einen be- stimmten Schlupfwert kann dann ersetzt werden durch die Forderung nach einer Regelung auf eine bestimmte Steigung der Schlupfkurve. Je größer die Steigung der Schlupfkurve im Betriebspunkt ist, desto stabiler ist der Betriebspunkt. Je kleiner die Steigung der Schlupfkurve im Betriebspunkt ist, desto kleiner ist die Stabilität des Betriebspunktes. Wenn die Steigung negativ ist, dann ist der Betriebspunkt instabil. Die Steigung ist also ein Maß für die Stabilitätsreserve des Betriebspunktes.

Es wurde in einer früheren Anmeldung bereits vorgeschlagen die Steigung der Schlupfkurve aus der Sprungantwort des Rades abzuschätzen. Hierzu wird der Bremsdruck sprungartig erhöht und die Radgeschwindigkeit daraufhin analysiert. Bei dieser Methode gibt es zwei Probleme:

1. Die Ungenauigkeit des Radgeschwindigkeitssignals erschwert vor allem bei kleinen Reibbeiwerten die Analyse der Radgescnwindigkeit. auf Eis ist z. B. $\lambda^* \approx 4$ %, und die Drucksprünge, die dann nur sehr klein sein sollen, bewirken daher auch nur sehr geringe Schlupfänderungen, die aus den erwähnten Ungenauigkeitsgründen nicht zuverlässig analysiert werden können.
2. Das Radverhalten nach dem Drucksprung wird von allerlei Störungen wie Störungen im Reibbeiwert der Fahrbahn und Schwankungen der aufstandskräfte verändert. Bei kleinen Drucksprungen können diese Veränderungen das transiente Radverhalten aufgrund des Drucksprungs total überstimmen. Eine zuverlässige analyse der Radgeschwindigkeit bezüglich der Steigung der Schlupfkurve ist dann nicht mehr möglich. Eine Erhöhung der Drucksprünge würde Verbesserung bringen, jedoch würden die Abweichungen vom Sollschlupf auch größer werden mit den Nachteilen, daß es zu Bremskraft-, Seitenführungskraft- und Komfortverlust kommt.

### Aufgabe und Lösung

Der Erfindung liegt die aufgabe zugrunde, eine Lösung der geschilderten Probleme zu finden.

Diese Aufgabe wird durch die im Anspruch 1 angegebenen Merkmale gelöst.

Eine zuverlässige Instabilitätserkennung ist nur möglich, wenn deutliche Radgeschwindigkeitsänderungen gemessen werden können. Da dies mit kleinen Sprüngen im Radbremszylinderdruck jedoch nicht erreicht werden kann, wird erfindungsgemäß vorgeschlagen, den Druck nicht sprunghaft sondern pulsförmig zu ändern. Dieser Puls kann erzeugt werden durch kurz aufeinanderfolgende Druckaufbau- und Druckabbausprünge (Fig. 1). Idealerweise sind dabei die Einlaß- und Auslaßventilzeiten so aufeinander abgestimmt, daß der Radbremszylinderdruck vor und nach dem Puls gleich groß ist. Weiter sollen diese zwei Zeiten so gewählt werden, daß der Reifenschlupf sich durch diesen Puls (auf jeden Fall kurzzeitig) deutlich ändert. Durch den sofortigen Druckabbau nach dem hohen Druckaufbausprung wird verhindert, daß sich der Reifenschlupf, nach dem Puls, also während der Analysephase zu schnell vergrößert, wenn der Reifen sich schon nahe beim Maximum der Schlupfkurve befindet.

Im folgenden wird vorausgesetzt, daß der Druck nach dem Puls genau denselben Wert hat wie vor dem Puls. Befindet sich der Reifenschlupf vor dem Druckpuls auf der stabilen Seite der Schlupfkurve, so wird der Reirenschlupf nach dem Puls schnell wieder kleiner. Befindet sich der Reifenschlupf vor dem Druckpuls auf einem "waagerechten" Teil der Schlupfkurve, so wird der Schlupf sich nach dem Druckpuls nicht mehr verkleinern. Befindet sich der Reifenschlupf vor dem Druckpuls auf der instabilen Seite der Schlupfkurve, so wird nach dem Druckpuls der Reifenschlupf sich noch weiter erhöhen.

Befindet sich der Reifenschlupf vor dem Druckpuls auf der stabilen Seite der Schlupfkurve, so bestimmt die Differenz des Kraftschlußbeiwerts vor und unmittelbar nach dem Druckpuls, wie schnell der Reifen wieder zum stabilen Punkt auf der Schlupfkurve zurück läuft. Wenn der Kraftschlußbeiwert unmittelbar nach dem Druckpuls dem Maximum der Schlupfkurve entspricht, so ist die Geschwindigkeit, mit der sich der Reifenschlupf zum stabilen Punkt auf der Schlupfkurve zubewegt ein Maß dafür, wie weit der stabile Punkt sich unterhalb des Maximums der Schlupfkurve befindet.

Die Geschwildigkeit mit der der Reifen nach dem Druckpuls wieder zum stabilen Punkt auf der Schlupfkurve zurückläuft ist damit ein Maß für die Stabilitätsreserve des Betriebspunktes.

Eine weitere mögliche Definition der Stabilitätsreserve ist folgende

$$SR = \frac{\overline{V}_{Ref} - \overline{V}_R}{V_{Ref}}$$

wobei $\overline{V}_R$ die mittlere Beschleunigung des Rades und $\overline{V}_{Ref}$ die mittlere Beschleunigung der Referenz- oder Fahrzeuggeschwindigkeit nach dem Druckpuls ist.

Auch andere, gleichwertige Definitionen für die analyse des Radverhaltens nach dem Druckpuls sind möglich. In Fig. 4 ist eine weitere alternative Definition der Stabilitätsreserve gegeben.

Bei der Berechnung der Stabilitätsreserve ist allerdings zu berücksichtigen, daß durch verschiedene Tot- und Verzögerungszeiten das Radgeschwindigkeitssignal bezüglich dem Druckpuls zeitverschoben auftritt. Weiter ist es üblicherweise notwendig, das gemessene Radgeschwindigkeitssignal zu filtern, bevor es zur Analyse herangezogen werden kann.

Wie bereits erwähnt, kann man auf diese Weise kurzzeitig deutliche Radgeschwindigkeitsänderungen erreichen, ohne daß sich der Druck im Radbremszylinder nach dem Puls geändert hat gegenüber dem vor dem Puls. Dadurch kann man "ohne den Druck im Prinzip zu ändern" Information darüber bekommen, wie stabil der Reifenschlupf ist und deshalb auch darüber, ob der Reifenschlupf sich auf der instabilen Seite der Schlupfkurve befindet. Dadurch ist es möglich, ein absimken der Referenzgeschwindigkeit zu vermeiden.

Weiter ist es möglich, durch Regelung auf eine positive Stabilitätsreserve, auf einer Reifenschlupf kleiner als $\lambda^*$ zu regeln.

Wie bereits erwähnt, ist das Reifenverhalten nach dem Druckpuls maßgebend für die Stabilitätsreserve des Reifens. Dieses Reifenverhalten soll erfindungsgemäß erfaßt werden.

Anhand der Zeichnung soll ein Ausführungsbeispiel der Erfindung näher erläutert werden.

Es zeigen

Fig. 1 einen Druckimpuls und die dafür notwendigen Ventilansteuersignale EV und AV,

Fig. 2 ein Schaltbild zur Durchführung des Erfindungsgedankens,

Fig. 3 Diagramme des Druckimpulsverlaufs und des Verlaufs der dadurch bewirkten Radgeschwindigkeitsänderung.

Fig. 4 zeigt in Blockform eine alternative Gewinnung der Stabilitätsreserve

In Fig. 2 sind mit 10 und 11 zwei Meßwertgeber für die Radgeschwindigkeit bezeichnet. Deren Signale werden einem Block 12 zur Bildung der Referenzgeschwindigkeit $V_{Ref}$ zugeführt. Der Meßwertgeber 10 wird im dargestellten Beispiel nur zu diesem Zweck benötigt; im übrigen wird nur die Auswertung des Signals des Meßwertgebers 11 zur Regelung des Bremsdrucks am zugehörigen Rad behandelt.

Die Referenzgeschwindigkeitssignale und das Radgeschwindigkeitssignal des Meßwertgebers 11 werden

einer Auswerteschaltung 13 zur Bildung von Schlupfsignalen zur Bremsdrucksteuerung zugeführt. Zur Bremsdrucksteuerung sind in bekannter Weise ein Einlaßventil 14 und ein Auslaßventil 15 vorgesehen.

In der Schaltung der Fig. 2 sind weiterhin eine zusätzliche Steuerschaltung 16 für die Ventile 14 und 15, ein Differenzbildner 17, eine Schwellwertstufe 18, ein Integrator 19, ein Maximumbildner 20 und ein Dividierer 21 vorgesehen.

Bei Ansteuern des Einlaßventils 14 ohne gleichzeitiges ansteuern des Auslaßventils 15 (Konstanthaltung) durch die Auswerteschaltung 13 wird über ein Und-Gatter 22, die Steuerschaltung 16 aktiviert, die die Ventile 14, 15 entsprechend Fig. 1 ansteuert und den Druckpuls erzeugt. Gleichzeitig wird der Block 12 angesteuert und dort die Referenzgeschwindigkeit $V_{Ref}$ gleich der augenblicklichen Radgeschwindigkeit gesetzt. Über ein weiteres Und-Gatter 23 wird außerdem der Integrator 19 und der Maximumbildner 20 aktiviert, deren Deaktivierung dann erfolgt, wenn ($V_{Ref}$ - $V_R$) einen vorgegebenen Vergleichswert (in 18) unterschreitet.

In Fig. 3 sind Verläufe der Radgeschwindigkeit $V_R$, der Referenzgeschwindigkeit $V_{Ref}$ und des Radbremsdrucks $P_B$ dargestellt. Ab dem Zeitpunkt tp wird die pulsförmige Änderung des Radbremsdrucks vorgenommen. Zu diesem Zeitpunkt wird - wie gesagt - die Referenzgeschwindigkeit gleich der Radgeschwindigkeit gesetzt, sodaß die Differenz $(V_{Ref} - V_R)_{t=tp} = 0$ ist. Die Steigung der Referenzgeschwindigkeit wird hier als bekannt vorausgesetzt. Ab dem Zeitpunkt tp wird nun im Zeitraum $T_I$ die im Block 17 gebildete Differenz ($V_{Ref}$ - $V_R$) bestimmt und integriert (17 und 19) und es wird gleichzeitig das Maximum dieser Differenz im Zeitraum $T_I$ bestimmt.

Nach $T_I$ (Millisekunden), wobei $T_I$ frei gewählt werden kann, und z.B. 100 Millisekunden beträgt, wird die Integration und die Suche nach der maximalen Differenz abgebrochen. Danach wird der Integralwert im Dividierer 21 durch $T_I$ und die maximale Differenz dividiert. Der Quotient SR ist per Definition die Stabilitätsreserve.

Bei großer Stabilitätsreserve klingt die Differenz ($V_{Ref}$ - $V_R$) sehr schnell wieder ab. Für diesen Fall kann $T_I$ klein gewählt werden, z.B. 50 msek. Bei kleiner Stabilitätsreserve dagegen klingt die Differenz ($V_{Ref}$ - $V_R$) nur langsam ab. Für diesen Fall, bei der das Maximum der Schlupfkurve fast erreicht ist, kann $T_I$ größer gewählt werden, z.B. 150 msek oder bis $\overline{V}_R \leqq 0$. Die Bremsdruckregelung kann sich deshalb schnell auf das Maximum der Schlupfkurve hin bewegen, und sich in der Nähe des Maximums lange aufhalten. Die Änderung der Periode $T_I$ erfolgt im ausführungsbeispiel durch das Abklingen der Differenz ($V_{Ref}$ - $V_R$), was durch den Schwell wertgeber 18 überwacht wird. Bevor der nächste Druckpuls abgegeben wird, sollte der Schlupf kleiner als $\lambda^*$ sein. Als Kriterium kann genommen werden $V_R \leqq 0$.

Der anfangs beschriebene Ansatz, daß der Druck nach dem Puls wieder gleich dem vor dem Puls sein sollte, ist nicht zwingend notwendig. Da jedoch erst nach dem Puls und nach der Analysezeit bekannt ist, ob der Druck nach dem Puls erhöht, gesenkt oder konstant gehalten werden sollte, erscheint es sinnvoll, den Druck nach dem Puls gleich hoch wie vor dem Puls zu halten.

Es sei noch erwähnt, daß auch negative Pulse (d.h. es wird zuerst der Druck abgebaut und kurz darauffolgend wieder aufgebaut) verwendet werden können. Dies kann besonders vorteilhaft sein, wenn das Maximum der Schlupfkurve erreicht worden ist.

Da die Klärung, ob eine Regelung bei optimalem Betriebspunkt stattfindet, bei zunehmendem Radträgheitsmoment schwieriger wird, läßt sich die vorgeschlagene Methode für die angetriebenen Räder (mit und ohne eingekuppelten Motor) und bei Allradantrieb besonders vorteilhaft einsetzen.

Das Signal SR am Ausgang des Dividierers 21 wird nun zur Bestimmung der Regelabweichung herangezogen. Dazu wird das Signal SR mit einem Sollwert $SR_{soll}$ verglichen. Danach wird die Regelabweichung ($SR_{soll}$ - SR) noch mit dem Verstärkungsfaktor K multipliziert. Die Negation von K * ($SR_{soll}$ - SR) ist die Ventilöffnungszeit $\Delta T_v$, wobei negative Werte Druckabbau und positive Werte Druckaufbau bedeuten:

$$\Delta T_v = - K * (SR_{soll} - SR) \quad (1)$$

Der Wert $SR_{soll}$ soll nach dem Bedarf an Seitenführungskraft gewählt werden, wobei $SR_{soll} = 0$ gewählt wird, wenn keine besondere Anforderungen nach Seitenführungskraft bestehen, z. B. bei Geradeausbremsung auf homogener Fahrbahn. Werte von $SR_{soll}$ größer als 0 bedeuten gesteigerten Bedarf an Seitenführungskraft und Regelung auf einen Schlupf kleiner als $\lambda^*$. Die Vorgabe des $SR_{soll}$-Wertes geschieht in einem überlagerten Regler, der die Fahrzeugbewegung beobachtet und über den Wert $SR_{soll}$ beeinflußt und zwar derart, daß die Beherrschbarkeit (Lenkbarkeit und Stabilität) des Fahrzeugs bei einer ABV-Bremsung verbessert wird.

Die Druckauf- und Druckabbaugradienten sind im allgemeinen unterschiedlich. Deshalb soll die nach (1) berechnete Ventilöffnungszeit korrigiert werden:

Druckaufbau:

$$\Delta T_{v,k} = - K * K_{auf} * (SR_{soll} - SR) \quad (2)$$

Druckabbau:

$$\Delta T_{v,k} = K * K_{ab} * (SR_{soll} - SR) \quad (3)$$

Weiter gilt, daß die Druckgradienten sich noch mit dem Radbremszylinderdruck ändern. Deshalb sollen die Korrekturfaktoren $K_{auf}$ und $K_{ab}$ sich auch mit dem Radbremszylinderdruck ändern:

$$K_{auf} = K_{0,auf} + K_{1,auf} * P_{RBZ}$$

$$K_{ab} = K_{0,ab} - K_{1,ab} * P_{RBZ}$$

wobei $K_{0,auf}$ und $K_{0,ab}$ feste Werte sind, $K_{1,auf}$ und $K_{1,ab}$ feste Proportionalitätsfaktoren sind und $P_{RBZ}$ der Radbremszylinderdruck ist.

Zur Erzeugung des Druckpulses können die Druckauf- und Druckabbauzeiten so gewählt werden daß:

1. der Druckpuls immer eine fest vorgegebene Höhe hat, oder

2. die maximale Rad-Referenzgeschwindigkeitsdifferenz immer einen vorgegebenen Wert hat.

Der Vorteil von 1. ist, daß die Druckpulse nicht zu groß werden, aber doch groß genug gewählt werden können, um in der Nähe vom Maximum der Schlupfkurve die Bestimmung von SR zuverlässig durchführen zu können. Der Nachteil von 1. ist, daß große Werte von SR nicht zuverlässig bestimmt werden können.

Der Vorteil von 2. ist, daß auch große Werte von SR zuverlässing bestimmt werden können, weil die notwendige maximale Geschwindigkeitsdifferenz immer erreicht wird. Der Nachteil von 2. ist, daß für große Werte von SR der Druckpuls sehr groß werden kann.

Zu große Werte von SR lassen sich nicht zuverlässig berechnen. Deshalb muß $SR_{soll}$ auf einem Maximalwert begrenzt werden, da sonst immer weiter Druck abgebaut werden könnte.

In Fig. 4 wird die Stabilitätsreserve SR durch Bildung des Ausdrucks

$$SR = 1 - I_1/I_2$$

in einem Block 40 gewonnen,
wobei

$$I_1 = \int_0^{T_I} (V_{Ref} - V_R)\, dt.$$

oder

$$I_1 = \int_0^{t_p+T_I} (V_{Ref} - V_R)\, dt.$$

ist und in einem Block 41 gewonnen wird, während $I_2 = (V_{Ref} - V_R)_{max}\, T_I$ in einem Block 42 gewonnen wird.

## Patentansprüche

1. Antiblockierregelsystem und/oder Antriebsschlupfregelsystem enthaltend einen Meßwertgeber (10,11) zur Bestimmung der Radgeschwindigkeit $V_R$, eine Auswerteschaltung (12,13), der die Meßwertgebersignale zugeführt werden und die eine in ihrem Verlauf dem Fahrzeuggeschwindigkeitsverlauf angenäherte Referenzgeschwindigkeit $V_{Ref}$ und Schlupfsignale zur Bremsdrucksteuerung erzeugt und Bremsdrucksteuereinrichtungen (14,15), die mit den Schlupfsignalen angesteuert werden und eine Variation des Bremsdrucks in Abhängigkeit vom Radschlupf bewirken, wobei diese Bremsdrucksteuereinrichtungen (14,15) neben Druckaufbau und Druckabbau auch eine Konstanthaltung des Bremsdrucks ermöglichen, dadurch gekennzeichnet, daß in einer Regelungsphase, mit vom Regelsystem vorgegebener Druckkonstanthaltung, eine kurzzeitige Bremsdruckänderung eingesteuert wird, daß aus dem dadurch bedingten Verhalten der Referenzgeschwindigkeit und der Radgeschwindigkeit die Stabilitätsreserve SR ermittelt wird und daß von dieser Stabilitätsreserve ein Signal zur Beeinflussung des Bremsdrucks im Sinne einer Einstellung des Schlupfwerts auf den stabilen Ast der Schlupfkurve und in der Nähe dessen Maximums abgeleitet wird.

2. Antiblockierregelsystem nach Anspruch 1, dadruch gekennzeichnet, daß beginnend mit der Druckänderung für eine kurze Zeit $T_I$ das Integral $I_1$ der Differenz zwischen Referenzgeschwindigkeit und Radgeschwindigkeit $(V_{Ref} - V_R)$ gebildet wird, daß außerdem während dieser Zeit das Maximum dieser Differenz $(V_{Ref} - V_R)_{max}$ ermittelt wird, und daß aus den ermittelten Werten die Stabilitätsreserve

$$SR = \frac{I_1}{(V_{Ref} - V_R)_{max}}$$

gebildet wird.

3. Antiblockierregelsystem nach Anspruch 2, dadurch gekennzeichnet, daß die Zeit $T_I$ variabel ist und von dem Abklingen der Differenz abhängig gemacht wird.

4. Antiblockierregelsystem nach Anspruch 2 oder 3, dadurch gekennzeichnet, daß zu Beginn der Integrationsphase die Referenzgeschwindigkeit $V_{Ref}$ gleich der Geschwindigkeit des betrachteten Rads gesetzt wird.

5. Antiblockierregelsystem nach Anspruch 2, dadurch gekennzeichnet, daß die Stabilitätsreserve SR durch zusätzliche Berücksichtigung der Zeit $T_I$ im Nenner gebildet wird.

6. Antiblockierregelsystem nach Anspruch 1, dadurch gekennzeichnet, daß die Stabilitätsreserve SR durch Bildung des Quotienten

$$SR = \frac{\overline{V}_{Ref} - \overline{V}_R}{V_{Ref}}$$

gewonnen wird, wobei $\overline{V}_R$ die mittlere Beschleunigung des Rads und $\overline{V}_{Ref}$ die mittlere Beschleunigung der Referenzgeschwindigkeit ist.

7. Antiblockierregelsystem nach Anspruch 1, dadurch gekennzeichnet, daß die Stabilitätsreserve gemäß der Beziehung

$$SR = 1 - I_1/I_2$$

gewonnen wird,
wobei $I_1$ das Zeitintegral der Differenz $\Delta = (V_{Ref} - V_R)$ über eine Kurze Zeit $T_I$ ist und $I_2$ das Produkt aus der Differenz $\Delta$ und der Zeit $T_I$ ist.

8. Antiblockierregelsystem nach Anspruch 7, dadurch gekennzeichnet, daß die Zeit $T_I$ ab der Druckänderung anläuft.

9. Antiblockierregelsystem nach Anspruch 7, dadurch gekennzeichnet, daß die Zeit ab dem Maximum der Differenz anläuft.

## Claims

1. Anti-skid control system and/or anti-slip control system comprising a measured value transducer (10, 11) to determine the wheel veolcity $V_R$, an evaluation circuit (12, 13) to which the measured value transducer signals are fed and which generates a reference velocity $V_{Ref}$ approximating in its curve to the vehicle velocity curve and slip, signals to control the braking pressure, and braking pressure control devices (14, 15) which are modulated by the slip signals and cause a variation of the braking pressure as a function of the wheel slip, said braking pressure control devices (14, 15) permitting a holding steady of the brake pressure in addition to pressure build-up and pressure decay, characterized in that, in a control phase, with pressure held steady as prescribed by the control system, a brief braking pressure variation is introduced, that the stability reserve SR is determined from the behaviour of the reference velocity and of the wheel velocity thereby conditioned, and that a signal to influence the braking pressure in the sense of an adjustment of the slip value to the stable branch of the slip curve and in proximity of its maximum is derived from said stability reserve.

2. Anti-skid control system according to Claim 1, characterized in that, starting with the pressure variation, the integral $I_1$ of the difference between reference velocity and wheel velocity $(V_{Ref} - V_R)$ is formed for a short time $T_I$, that the maximum of said difference $(V_{Ref} - V_R)_{max}$ is also found during said time, and that the stability reserve

$$SR = \frac{I_1}{(V_{Ref} - V_R)_{max}}$$

is formed from the values found.

3. Anti-skid control system according to Claim 2, characterized in that the the $T_I$ is variable and is made a function of the decay of the difference.

4. Anti-skid control system according to Claim 2 or 3, characterized in that at the start of the integration phase the reference velocity $V_{Ref}$ is set equal to the velocity of the relevant wheel.

5. Anti-skid control system according to Claim 2, chartcerized in that the stability reserve SR is formed by taking the time $T_I$ additionally into consideration in the denominator.

6. Anti-skid control system according to Claim 1, characterized in that the stability reserve SR is obtained by forming the quotient

$$SR = \frac{\overline{V}_{Ref} - \overline{V}_R}{V_{Ref}}$$

where $\overline{V}_R$ is the mean acceleration of the wheel and $\overline{V}_{Ref}$ is the mean acceleration of the reference velocity.

7. Anti-skid control system according to Claim 1, characterized in that the stability reserve is obtained according to the relationship

$$SR = 1 - I_1/I_2$$

where $I_1$ is the time integral of the difference $\Delta = (V_{Ref} - V_R)$ over a short the $T_I$ and $I_2$ is the product of the difference $\Delta$ and the time $T_I$.

8. Anti-skid control system according to Claim 7, characterized in that the time $T_I$ runs from the pressure variation.

9. Anti-skid control system according to Claim 7, characterized in that the time runs from the maximum of the difference.

## Revendications

1. Système anti-blocage et/ou de régulation de glissement comportant un capteur de valeur de mesure (10, 11) pour déterminer la vitesse de roue $V_R$, un circuit d'exploitation (12, 13) qui reçoit les signaux des capteurs de valeur de mesure et génère une vitesse de référence $V_{Ref}$ voisine dans son tracé de la vitesse du véhicule et les signaux de glissement pour commander la pression de frein ainsi que des installations de commande de pression de frein (14, 15) qui sont commandées par les signaux de glissement et provoquent une variation de la pression de frein en fonction du glissement de roue, ces installations de commande pression de frein (14, 15) permettant non seulement une montée et une chute de pression mais également un maintien de la pression de frein à un niveau constant, système caractérisé en ce que dans une phase de régulation avec maintien constant de la pression par un système de régulation prédéterminé, il commande une variation de pression de frein de courte durée de façon qu'avec le comportement ainsi induit on puisse déterminer la réserve de stabilité SR à partir de la vitesse de référence et de la vitesse de roue et en ce qu'à partir de cette réserve de stabilité on forme un signal pour influencer la pression de frein dans le sens de l'obtention d'une valeur de glissement située sur la branche stable de la courbe de glissement et au voisinage de son maximum.

2. Système anti-blocage selon la revendication 1, caractérisé en ce qu'en commençant par la variation de pression on forme pendant une courte période $T_I$, l'intégrale $I_1$ de la différence entre la vitesse de référence et la vitesse de roue $(V_{Ref} - V_R)$ et en ce qu'en outre pendant ce temps on détermine le maximum de cette différence $(V_{Ref} - V_R)_{max}$ et à partir des valeurs ainsi déterminées on forme la réserve de stabilité

$$SR = \frac{I_1}{(V_{Ref} - V_R)_{max}}$$

3. Système anti-blocage selon la revendication 2, caractérisé en ce que la période $T_I$ est variable et est rendue dépendante de la diminution de la différence.

4. Système anti-blocage selon la revendication 2 ou 3, caractérisé en ce qu'au début de la phase d'intégration, la vitesse de référence $V_{Ref}$ est fixée à la même valeur que la vitesse de la roue concernée.

5. Système anti-blocage selon la revendication 2, caractérisé en ce que la réserve de stabilité SR est formée en outre en tenant compte du temps $T_I$ dans le numérateur.

6. Système anti-blocage selon la revendication 1, caractérisé en ce qu'on obtient la réserve de stabilité SR en formant le quotient

$$SR = \frac{\overline{\nabla}_{Ref} - \overline{\nabla}_R}{V_{Ref}}$$

dans lequel $\overline{V}$ représente l'accélération moyenne de la roue et $\overline{V}_{Ref}$ représente l'accélération moyenne de la vitesse de référence.

7. Système anti-blocage selon la revendication 1, caractérisé en ce qu'on obtient la réserve de stabilité selon la relation

$$SR = 1 - I_1/I_2$$

dans laquelle $I_1$ est l'intégrale du temps de la différence $\Delta = (V_{Ref} - V_R)$ sur une courte période $T_I$ et $I_2$ est le produit de la différence $\Delta$ et du temps $T_I$.

8. Système anti-blocage selon la revendication 7, caractérisé en ce que la période $T_I$ démarre à partir de la variation de pression.

9. Système anti-blocage selon la revendication 7, caractérisé en ce que la période démarre à partir du maximum de la différence.

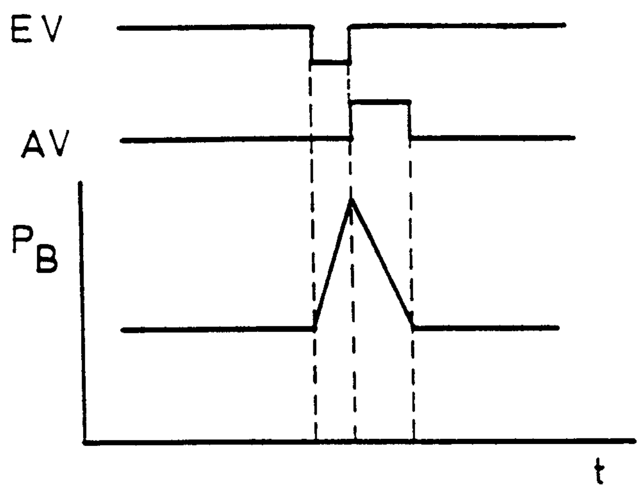


Fig.1

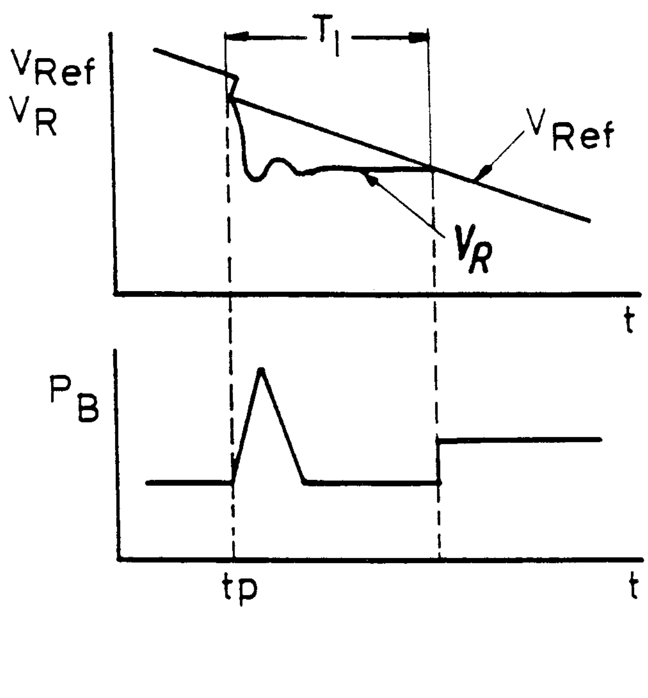


Fig.3

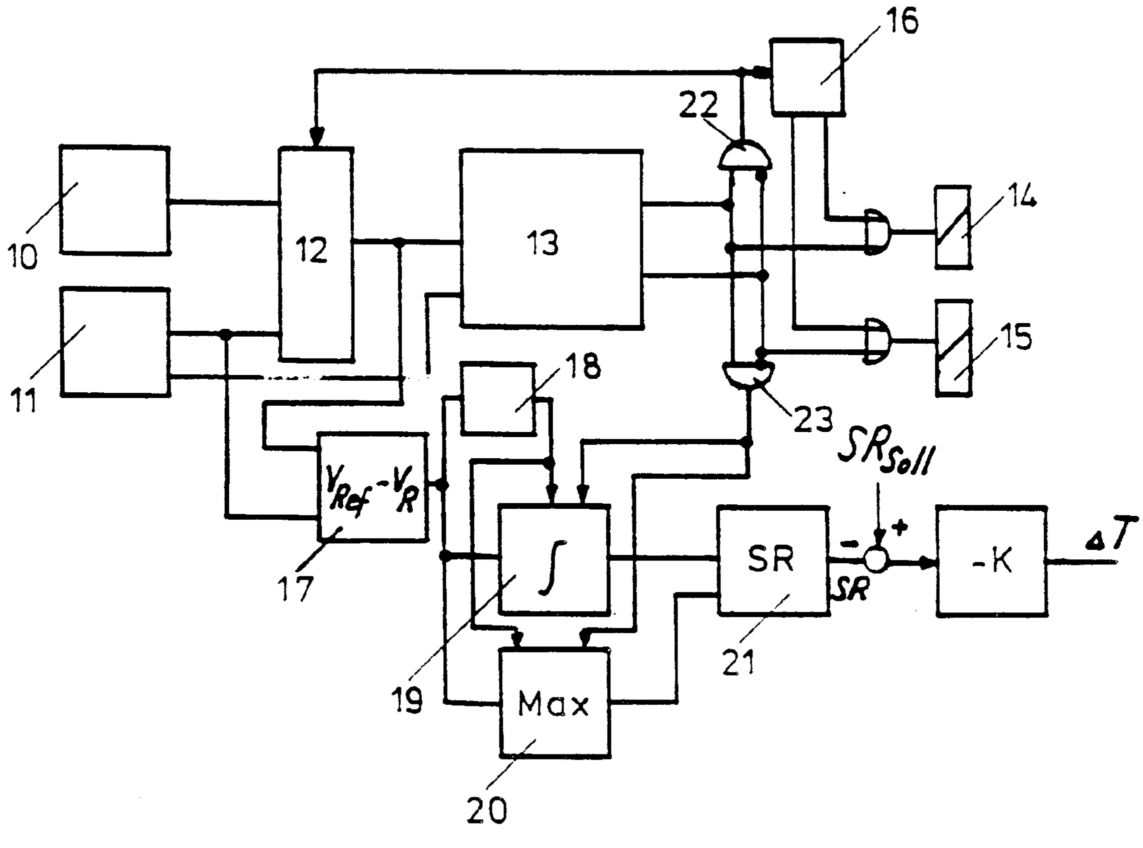


Fig. 2

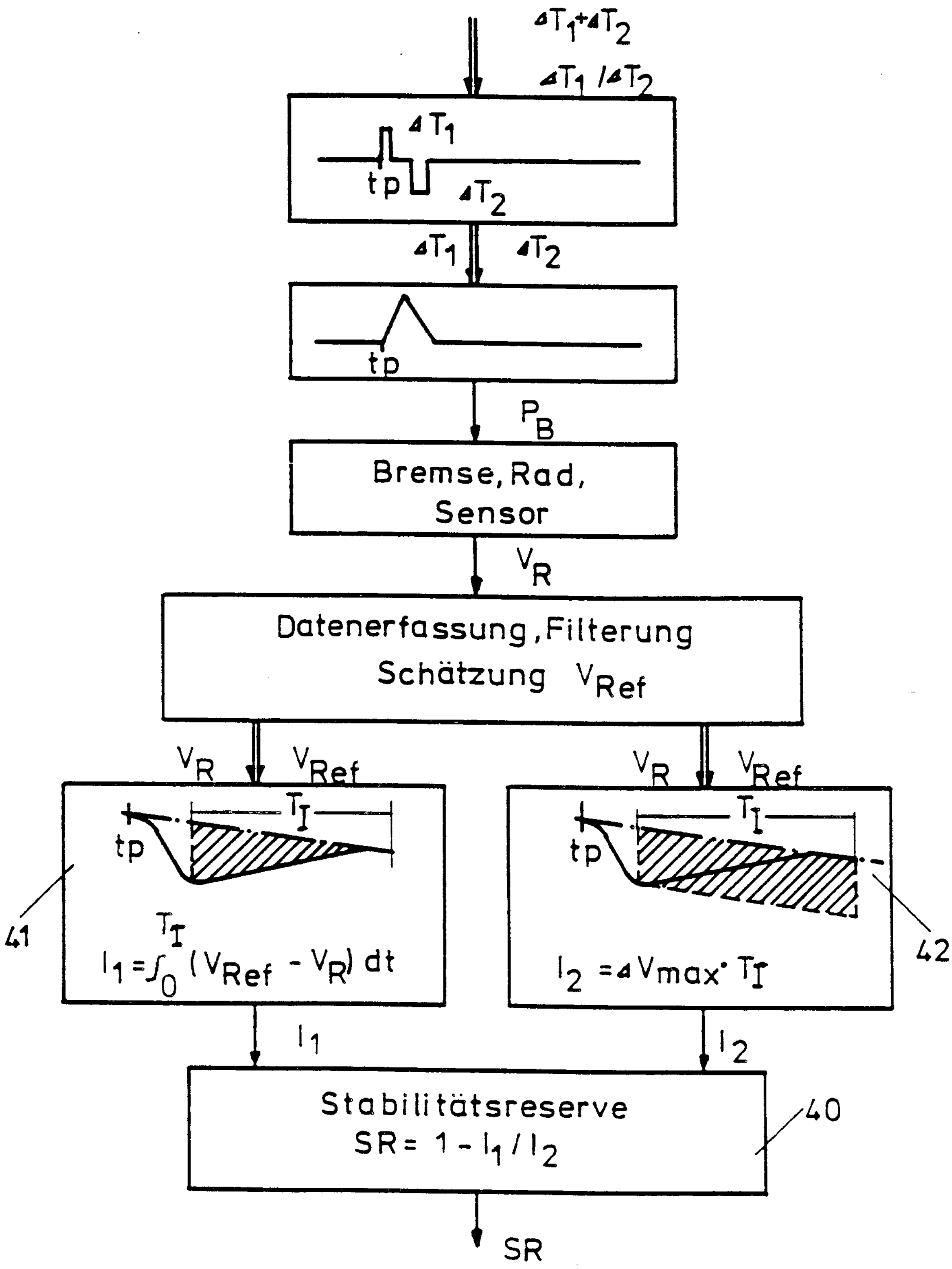
ΔT1+ΔT2
ΔT1 / ΔT2
ΔT1
tp
ΔT2
ΔT1
ΔT2
tp
PB
Bremse, Rad, Sensor
VR
Datenerfassung, Filterung
Schätzung VRef
VR
VRef
VR
VRef
TI
tp
TI
tp
41
I1 = ∫0^TI (VRef - VR) dt
I2 = ΔVmax · TI
42
I1
I2
Stabilitätsreserve
SR = 1 - I1 / I2
40
SR

Fig.4